# EUROPÄISCHE PATENTANMELDUNG

(11) **EP 2 676 590 A1**
(43) Veröffentlichungstag der Anmeldung: **25.12.2013**
(21) Anmeldenummer: 12004582.8
(22) Anmeldetag: 19.06.2012
(51) Int. Cl.: A47L 9/00, B60B 33/00

(54) **Bodenstaubsauger mit wenigstens einer drehbar gelagerten Lenkrolleneinheit**

(71) Anmelder: Robert Thomas Metall- und Elektrowerke GmbH & Co. KG, 57290 Neunkirchen (DE)
(72) Erfinder: Thomas, Paul-Gerhard, 57290 Neunkirchen (DE)
(74) Vertreter: Grosse, Wolf-Dietrich Rüdiger

(57) **Zusammenfassung**

Ein Bodenstaubsauger mit wenigstens einer Lenkrolleneinheit (3), die ein Lenkrollengehäuse (5) aufweist, in dem mindestens ein Rad (9) gelagert ist, das im Gebrauchszustand des Bodenstaubsaugers auf dem Boden (12) aufliegt, wobei das Lenkrollengehäuse (5) mittels einer gegenüber dem Gehäuseunterteil (2) des Bodenstaubsaugers im Wesentlichen vertikal verlaufenden Achse (6) drehbar gelagert ist, und die Achse (6) in eine zylindrische Aufnahme (13) des Unterteils (2) eingerastet ist, soll so weitergebildet werden, dass das Überfahren von Hindernissen von geringer Höhe, beispielsweise Kabel, Teppichkanten oder Türschwellen erleichtert wird. Dazu wird vorgeschlagen, dass in dem Lenkrollengehäuse (5) der Lenkrolleneinheit (3) mindestens ein zweites Rad (8, 8') in Bewegungsrichtung vor dem Rad (9) angeordnet ist, dessen Lauffläche einen ersten Abstand zum Boden (12) aufweist.

## Beschreibung

Bodenstaubsauger mit wenigstens einer drehbar gelagerten Lenkrolleneinheit

Die Erfindung betrifft einen Bodenstaubsauger mit wenigstens einer Lenkrolleneinheit die ein Lenkrollengehäuse aufweist, in dem mindestens ein Rad gelagert ist, das im Gebrauchszustand des Bodenstaubsaugers auf dem Boden aufliegt, wobei das Lenkrollengehäuse mittels einer gegenüber dem Gehäuseunterteil des Bodenstaubsaugers im Wesentlichen vertikal verlaufenden Achse drehbar gelagert ist, und die Achse in eine zylindrische Aufnahme des Unterteils eingerastet ist.

Benutzer ziehen häufig den Bodenstaubsauger während des Betriebes am Saugschlauch hinter sich her. Um eine gute Beweglichkeit zu gewährleisten, sind vorzugsweise die im vorderen Bereich angeordneten Laufräder in einer Lenkrolleneinheit angeordnet. Dabei weist die Lenkrolleneinheit selbst ein Lenkrollengehäuse auf, das um eine gegenüber dem unteren Gehäuseteil des Bodenstaubsaugers im Wesentlichen vertikal angeordnete Achse drehbar gelagert ist. Das Lenkrollengehäuse nimmt ein den Bodenkontakt vermittelndes Rad auf, das auf einer zum Boden im Wesentlichen parallel gehaltenen Achse gelagert ist. Das Lenkrollengehäuse ist vor dem Rad als Gleitkufe ausgebildet, damit auch kantige Hindernisse wie Türschwellen od. dgl. vom Bodenstaubsauger gleichermaßen gut und unabhängig von der Bodenbeschaffenheit und Eindringtiefe der Laufrolle in die zu saugende Bodenfläche ohne besondere Kraftanstrengung gleitend überwunden werden können. Solche mit Gleitkufen und Rad bzw. Laufrolle versehene Lenkrolleneinheiten sind beispielsweise aus der DE 28 24 033 A1 und der DE 10 2008 011 542 A1 bekannt, bei denen eine Laufrolle in einer drehbar gelagerten Gleitkufe gehalten ist.

Bei dem Ziehen über Hindernisse von geringer Höhe kommt es häufig zu einem Blockieren der Laufrollen, da diese aufgrund ihres geringen Durchmessers die Hindernisse nicht überfahren können. Insbesondere kommt es auf Hartböden beispielsweise vor, dass das Kabel des Bodenstaubsaugers selbst nicht überfahren werden kann, sondern von diesem Bodenstaubsauger vor sich hergeschoben wird.

Die Erfindung geht von der Aufgabe aus, bei einem Bodenstaubsauger der eingangs genannten Art, das Überfahren von Hindernissen von geringer Höhe, beispielsweise Kabel, Teppichkanten oder Türschwellen, zu ermöglichen bzw. zu erleichtern.

Die Aufgabe wird erfindungsgemäß für einen Bodenstaubsauger mit wenigstens einer drehbar gelagerten Lenkrolleneinheit der eingangs genannten Art durch die im Patentanspruch 1 angegebenen Merkmale gelöst. Vorteilhafte Ausbildungen sind in den abhängigen Patentansprüchen angegeben.

Bedeutsam ist dabei, dass in dem Lenkrollengehäuse der mindestens einen Lenkrolleneinheit mindestens ein zweites Rad in Bewegungsrichtung vor dem Rad angeordnet ist, dessen Lauffläche einen ersten Abstand zum Boden aufweist.

Dadurch wird erreicht, dass das zweite, in Bewegungsrichtung vorne liegende Rad, auf das Hindernis geringer Höhe so auftrifft, dass es um einen kleineren Winkel als das auf dem Boden aufliegende Rad gedreht werden muss, bis das Hindernis überwunden ist. Beim Überrollen des Hindernisses durch das zweite Rad, wird das auf dem Boden aufliegende Rad bereits angehoben, so dass auch dieses nur noch um einen kleineren Winkel gedreht werden muss um das Hindernis zu überwinden.

Es hat sich als vorteilhaft erwiesen, wenn in dem Lenkrollengehäuse der Lenkrolleneinheit ein weiteres Rad in Bewegungsrichtung vor den Rädern angeordnet ist, dessen Lauffläche einen zweiten, gegenüber dem ersten Abstand größeren Abstand zum Boden aufweist.

Damit verfügt die Lenkrolleneinheit über eine Anzahl von hinter einander versetzt angeordneten Rädern oder Radpaaren, deren Abstand zum Boden derart variiert, dass das in Bewegungsrichtung vorderste Rad oder Radpaar am tiefsten Punkt den größten Abstand zum Boden aufweist. Die Abstände der in Bewegungsrichtung dahinter liegenden Räder oder Radpaare werden kontinuierlich reduziert, bis dass das hinterste Rad oder Radpaar den Boden berührt.

Erfindungsgemäß können die zusätzlichen Räder kleinere Durchmesser aufweisen.

In vorteilhafter Weise können die Räder in Bewegungsrichtung gegeneinander seitlich versetzt angeordnet sein und sich ihre äußeren Radien in der Ebene senkrecht zu ihren Achsen teilweise überlappen.

Dadurch wird erreicht, dass mehrere Räder mit verhältnismäßig großen Durchmessern auf kleinem Raum in Bewegungsrichtung hintereinander in dem Lenkrollengehäuse angeordnet werden können.

Vorzugsweise können das Anstiegsverhältnis der Abstände der Räder zum Boden sowie die Abstände der Räder zueinander im Wesentlichen gleich sein, so dass sich ein gradliniger Anstieg der Berührungspunkte der Räder ergibt.

Es hat sich als vorteilhaft erwiesen, wenn mindestens zwei in Bewegungsrichtung vor dem hintersten Rad liegende Räder paarweise in Bewegungsrichtung nebeneinander liegend angeordnet sind

In vorteilhafter Weise kann das Rad wenigstens teilweise radial umgreifend mit einer elastischen Auflage versehen sein und eine größte Breite als die übrigen Räder aufweisen.

Die Erfindung ist nachfolgend anhand von in der Zeichnung dargestellten Ausführungsbeispielen näher erläutert. Es zeigen:
- Figur 1: einen Bodenstaubsauger mit erfindungsgemäßen Lenkrolleneinheiten in einer Ansicht von unten,
- Figur 2: eine Lenkrolleneinheit gemäß Figur 1 in perspektivischer Einzeldarstellung von schräg unten und
- Figur 3: einen vorderen Teil des Bodenstaubsaugers mit einer auf dem Boden aufliegenden Lenkrolleneinheit gemäß Figur 1 im seitlichen Schnitt.

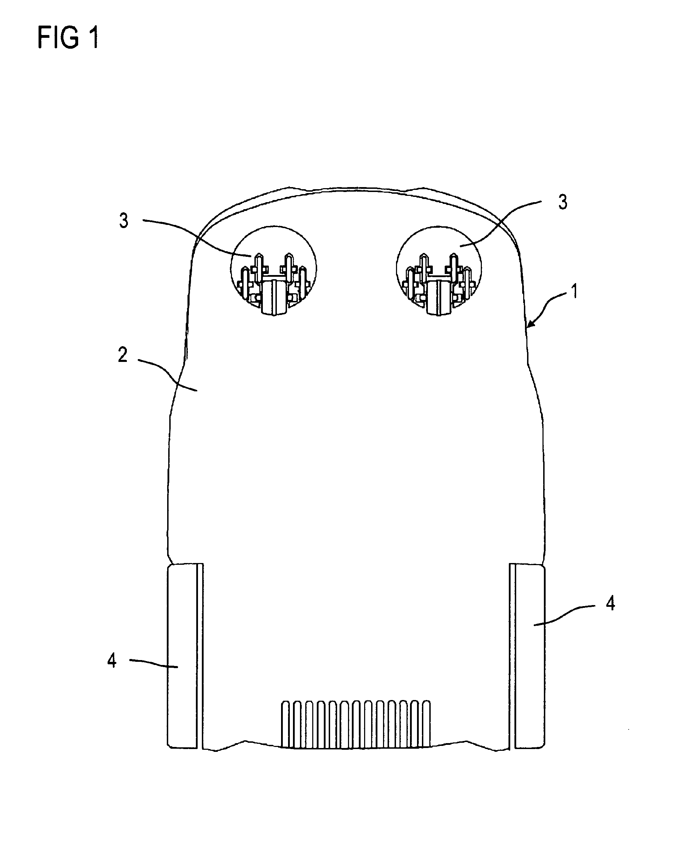

Die Figur 1 zeigt einen Bodenstaubsauger mit einem Gehäuse 1 von unten. Das Gehäuseunterteil 2 besteht aus einer Schale, die als Kunststoffspritzgussteil gefertigt ist. In dieses Gehäuseunterteil 2 sind im vorderen Bereich zwei Lenkrolleneinheiten 3 zusammen mit ihren vertikalen Achsen rastend in dafür vorgesehene zylinderförmige Ausnehmungen eingesteckt, wie dies nachfolgend noch näher beschrieben wird. Selbstverständlich kann der Bodenstaubsauger auch nur mit einer, dann vorzugsweise mittig im vorderen Bereich des Bodenstaubsaugers angeordneten Lenkrolleneinheit ausgestattet werden. Im hinteren Bereich des Gehäuseunterteils 2 sind seitlich zwei Laufräder 4 angebracht.

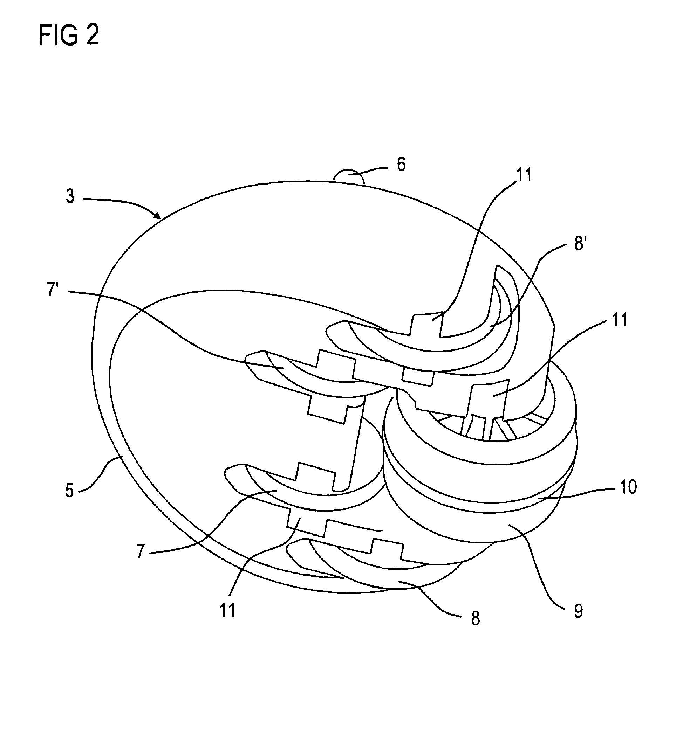

In der Figur 2 ist eine der Lenkrolleneinheiten 3 perspektivisch von schräg unten dargestellt, die aus einem Lenkrollengehäuse 5 besteht, an dessen Spitze die oben genannte vertikale Achse 6 hervorragt. Die Lenkrolleneinheit 3 weist mehrere versetzt angeordnete Räder 7 bis 9 sowie 7' und 8' auf, deren Durchmesser variieren, wie dies im Nachfolgenden noch näher erläutert wird. Die vorderen kleineren weiteren Räder 7, 7' und die mittleren zweiten Räder 8, 8' sind schmal ausgeführt und jeweils paarweise beidseitig des hinteren Rades 9 angeordnet. Das hintere große Rad 9 ist in der Mitte angeordnet und breit ausgeführt. Es ist mit einer umlaufenden elastischen Auflage 10 versehen. Die mittleren zweiten Räder 8 und 8' sind mit etwas größerem Abstand derart seitlich des großen Rades 9 angeordnet, dass zwischen die zweiten Räder 8 und 8' sowie das Rad 9 die kleinen weiteren Räder 7 und 7' gelagert werden können, wobei sich die Laufflächen der kleinen weiteren Räder 7 und 7' sowie des Rades 9 durch ihre Abrundungen seitlich gerade nicht berühren, so dass sich ihre äußeren Radien in der Ebene senkrecht zu ihren Achsen teilweise überlappen.

Zur Lagerung im Lenkrollengehäuse 5 sind die Räder 7 bis 9 sowie 7' und 8' mit Achsen versehen, die in bekannter Weise von unten in schlitzförmige Achslager 11 des Lenkrollengehäuses 5 rastend eingesteckt werden. Dadurch wird die Montage erleichtert und auf einfache Weise eine sichere Befestigung erreicht.

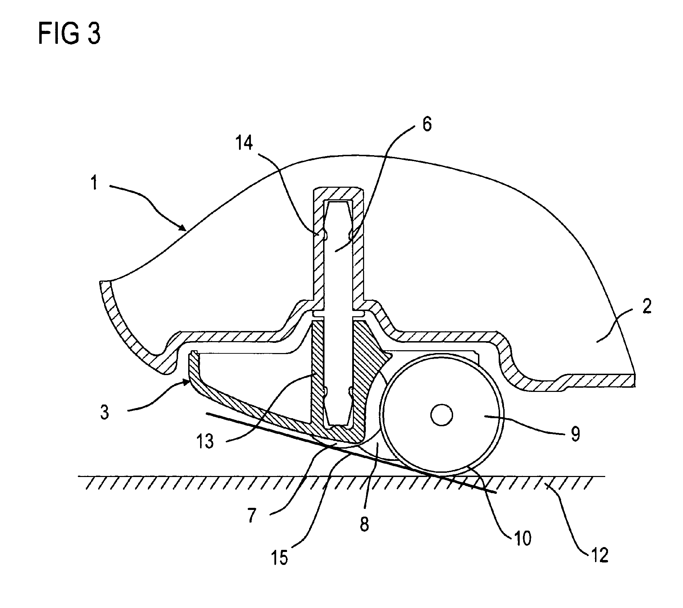

Die kleinen weiteren Räder 7 und 7', die mittleren zweiten Räder 8 und 8' und das große Rad 9 weisen derartige Durchmesser und Abstände auf, dass sich der Abstand der Räder 7 bis 8' zum Boden 12 in Lauf- bzw. Bewegungsrichtung langsam vergrößert, wie dies anhand der Figur 3 noch näher ersichtlich wird.

Die Figur 3 stellt einen vertikalen Schnitt durch das Lenkrollengehäuse 5 der auf dem Boden 12 laufenden Lenkrolleneinheit 3 sowie einen Teil des Gehäuses 1 des Bodenstaubsaugers dar. Die vertikale Achse 6 ist in eine zylindrische Aufnahme 13 in dem Lenkrollengehäuse 6 gehalten, mittels derer sie in eine in dem Unterboden 2 des Gehäuses 1 vorgesehene zylindrische Aufnahme 14 rastend eingesteckt wird, so dass die Lenkrolleneinheit 3 in dem Unterboden 2 des Bodenstaubsaugers drehbar gelagert ist.

In dieser Darstellung wird ersichtlich, dass die Abstände der Räder 7 bis 9 zum Boden 12 variieren. Während das große Rad 9 mit seiner Auflage 10 voll auf dem Boden 12 aufliegt, weisen die unmittelbar davor angeordneten mittleren, zweiten Räder 8 und 8' einen ersten Abstand und die vorderen, kleinen, weiteren Räder 7 und 7' einen zweiten Abstand auf. Diese Abstände können beispielsweise derart gewählt werden, dass der zweite Abstand doppelt so groß ist wie der erste Abstand. Anhand der Tangente 15 wird deutlich, dass die Abstände gleichmäßig ansteigen. Die Abstände können aber auch ungleichmäßig ansteigen, so dass die Tangente nicht alle Räder 7 bis 9 berührt.

Die unterschiedlichen Abstände können dadurch bewerkstelligt werden, dass die Durchmesser der Räder 7 bis 9 variieren und/oder dass die Räder 7 bis 9 in unterschiedlichen Höhen im Lenkrollengehäuse 5 gelagert sind.

Die erfindungsgemäßen Lenkrolleneinheiten 3 verfügen über eine Anzahl von hinter einander versetzt angeordneten Rädern 7 bis 9 sowie 7' und 8' oder Radpaaren, deren im Wesentlichen parallel verlaufenden Achsen in dem Lenkrollengehäuse 5 gelagert sind. Um das Überfahren von Kabeln, Teppichkanten und Schwellen zu erleichtern, wird der Abstand der versetzt angeordneten Räder 7 bis 9 sowie 7' und 8' zum Boden 12 derart variiert, dass das in Bewegungsrichtung zuvorderst liegende Rad 7 und 7' oder Radpaar an ihrem tiefsten Punkt den größten Abstand zum Boden 12 aufweist. Die Abstände der in Bewegungsrichtung dahinter liegenden Räder 8 bis 9 sowie 8' oder Radpaare werden sukzessiv verringert, so dass das in Bewegungsrichtung am weitesten hinten liegende Rad 9 oder Radpaar den Boden berührt.

Durch die versetzte Anordnung der Räder 7 bis 9 sowie 7' und 8' werden Hindernisse, wie Elektrokabel, deren Außendurchmesser regelmäßig die Größe des zweiten Abstandes der weiteren Räder 7, 7' nur geringfügig übersteigen, entsprechen bei ihrem erstmaligen Kontakt mit einem der Räder 7 bis 9 sowie 7' und 8' zunächst im unteren Bereich des eingreifenden vorderen, weiteren Rades 7 oder 7' erfasst. Im weiteren Verlauf der Bewegung dreht sich das eingreifende weitere Rad 7 oder 7' in Fahrtrichtung und erniedrigt dadurch den Angriffspunkt des Hindernisses am nachfolgenden zweiten Rad 8 oder 8'. Hierbei zeigt es sich als vorteilhaft, wenn die Räder 7 bis 9 sowie 7' und 8' so eng hintereinander gesetzt sind, dass das jeweils nachfolgende Rad zum Eingriff kommt, wenn das vorausgehende Rad das Hindernis ungefähr an seinem tiefsten Punkt berührt.

### Bezugszeichenliste

- 1: Gehäuse
- 2: Gehäuseunterteil
- 3: Lenkrolleneinheit
- 4: Laufräder
- 5: Lenkrollengehäuse
- 6: vertikale Achse
- 7, 7': vordere Räder
- 8, 8': mittlere Räder
- 9: Rad
- 10: Auflage
- 11: schlitzförmige Achslager
- 12: Boden
- 13: zylindrische Aufnahme
- 14: zylindrische Aufnahme
- 15: Linie / Tangente

## Patentansprüche

1. Bodenstaubsauger mit wenigstens einer Lenkrolleneinheit (3), die ein Lenkrollengehäuse (5) aufweist, in dem mindestens ein Rad (9) gelagert ist, das im Gebrauchszustand des Bodenstaubsaugers auf dem Boden (12) aufliegt, wobei das Lenkrollengehäuse (5) mittels einer gegenüber dem Gehäuseunterteil (2) des Bodenstaubsaugers im Wesentlichen vertikal verlaufenden Achse (6) drehbar gelagert ist, und die Achse (6) in eine zylindrische Aufnahme (13) des Unterteils (2) eingerastet ist,
**dadurch gekennzeichnet,**
**dass** in dem Lenkrollengehäuse (5) der Lenkrolleneinheit (3) mindestens ein zweites Rad (8, 8') in Bewegungsrichtung vor dem Rad (9) angeordnet ist, dessen Lauffläche einen ersten Abstand zum Boden (12) aufweist.

2. Bodenstaubsauger nach Anspruch 1,
**dadurch gekennzeichnet,**
**dass** in dem Lenkrollengehäuse (5) der Lenkrolleneinheit (3) mindestens ein weiteres Rad (7, 7') in Bewegungsrichtung vor den Rädern (8, 8', 9) angeordnet ist, dessen Lauffläche einen zweiten, gegenüber dem ersten Abstand größeren Abstand zum Boden (12) aufweist.

3. Bodenstaubsauger nach Anspruch 1 oder 2,
**dadurch gekennzeichnet,**
**dass** die zusätzlichen Räder (7, 7', 8, 8') kleinere Durchmesser aufweisen.

4. Bodenstaubsauger nach einem der Ansprüche 1 bis 3,
**dadurch gekennzeichnet,**
**dass** die Räder (7 bis 9) zur Bewegungsrichtung gegeneinander seitlich versetzt angeordnet sind, und sich ihre äußeren Radien in der Ebene senkrecht zu ihren Achsen teilweise überlappen.

5. Bodenstaubsauger nach einem der Ansprüche 1 bis 4,
**dadurch gekennzeichnet,**
**dass** das Anstiegsverhältnis der Abstände der Räder (7 bis 9) zum Boden im Wesentlichen gleich ist, so dass sich ein gradliniger Anstieg der Berührungspunkte der Räder (7 bis 9) ergibt.

6. Bodenstaubsauger nach einem der Ansprüche 1 bis 5,
**dadurch gekennzeichnet,**
**dass** die Abstände der Räder (7 bis 9) zueinander im Wesentlichen gleich sind,

7. Bodenstaubsauger nach einem der Ansprüche 1 bis 6,
**dadurch gekennzeichnet,**
**dass** mindestens zwei in Bewegungsrichtung vor dem hintersten Rad (9) liegende Räder (7 bis 8') paarweise in Bewegungsrichtung nebeneinander liegend angeordnet sind

8. Bodenstaubsauger nach einem der Ansprüche 1 bis 7,
**dadurch gekennzeichnet,**
**dass** das Rad (9) wenigstens teilweise radial umgreifend mit einer elastischen Auflage (10) versehen ist.

9. Bodenstaubsauger nach einem der Ansprüche 1 bis 8,
**dadurch gekennzeichnet,**
**dass** das Rad (9) eine größte Breite als die Räder (7, 7', 8, 8') aufweist.
